**Europäisches Patentamt**

**European Patent Office**

**Office européen des brevets**

(11) Veröffentlichungsnummer: **0 151 263**
**A2**

(12) # EUROPÄISCHE PATENTANMELDUNG

(21) Anmeldenummer: **84114970.1**

(22) Anmeldetag: **08.12.84**

(51) Int. Cl.⁴: **F 16 B 37/08**
**F 16 B 35/04**

(30) Priorität: **09.12.83 DE 3344574**

(43) Veröffentlichungstag der Anmeldung:
**14.08.85 Patentblatt 85/33**

(84) Benannte Vertragsstaaten:
**AT BE CH DE FR GB IT LI LU NL SE**

(71) Anmelder: **Piecusch, Norbert L.**
**Hauptstrasse 21**
**D-6074 Rödermark-Waldacker(DE)**

(72) Erfinder: **Piecusch, Norbert L.**
**Hauptstrasse 21**
**D-6074 Rödermark-Waldacker(DE)**

(74) Vertreter: **Schieferdecker, Lutz, Dipl.-Ing. et al,**
**Patentanwälte Dr.-Ing. P.K. Holzhäuser Dipl.-Met. W.**
**Goldbach Dipl.-Ing.Ing. L. Schieferdecker Herrnstrasse 37**
**D-6050 Offenbach am Main(DE)**

(54) **Befestigungselement.**

(57) Die Erfindung betrifft ein Befestigungselement, das aus einem Bolzen und einem diesen aufnehmenden Träger mit einer Bohrung besteht. Der Kern der Erfindung liegt darin, daß der Bolzen ein Gewindebolzen mit kreissegmentförmigem Querschnitt ist, daß die Bohrung einen freien, kreissegmentförmigen Querschnitt mit einer solchen lichten Weite aufweist, daß der kreissegmentförmige Gewindebolzen längs verschiebbar ist und daß in der nicht zylindrischen Fläche der Bohrung gewindeähnliche Erhebungen und Vertiefungen angeordnet sind.

Fig.6

EP 0 151 263 A2

Dr.-Ing. Holzhäuser
Dipl.-Met. Goldbach
Dipl.-Ing. Schieferdecker
Patentanwälte
Herrnstraße 37 · 6050 OFFENBACH

Herrn

Norbert L. Piecusch

Hauptstr. 21

6074 Rödermark-Waldacker

------------------------------------------------

" Befestigungselement "

------------------------------------------------

Die Erfindung betrifft ein Befestigungselement, das aus einem Bolzen und einem diesen aufnehmenden Träger mit einer Bohrung besteht.

Eine Befestigung dieser Art ist beispielsweise unter dem Begriff "Bajonettverschluß" bekannt. Er gestattet ein leichtes und schnelles Zusammenfügen zweier Teile in einer einzigen, vorgegebenen Position. Sofern zwei Teile in unterschiedlichem Abstand zueinander bzw. zu einer Bezugsebene angebracht werden sollen, läßt sich der Bajonettverschluß nicht verwenden.

Der Erfindung liegt daher die Aufgabe zugrunde, Maßnahmen vorzusehen, damit zwei Teile unter Verwendung eines Bolzens und einer Bohrung schnell aneinander sowie in beliebigem Abstand zueinander befestigt werden können.

Gelöst wird diese Aufgabe dadurch, daß der Bolzen ein Gewindebolzen mit kreissegmentförmigem Querschnitt ist,

- 2 -

daß die Bohrung einen kreissegmentförmigen Querschnitt mit einer solchen Weite aufweist, daß der kreissegementförmige Gewindebolzen längs verschiebbar ist und daß in der ebenen oder nahezu ebenen Fläche der Bohrung gewindegangähnliche Erhebungen und Vertiefungen angeordnet sind.

Der Gewindebolzen läßt sich somit beliebig weit in die Bohrung einschieben, ohne daß er dabei gedreht werden muß. Zum Verankern wird er beispielsweise um 180$^o$ gedreht, wodurch seine Gewindegänge in die gewindegangähnlichen Erhebungen und Vertiefungen der ebenen Bohrungsfläche eingreifen und eine sichere und feste Verankerung herstellen. In dieser Position kann der Bolzen durch einen Keil, eine Kontermutter oder eine Fixierschraube gesichert werden, so daß er sich auch bei Belastung nicht selbsttätig in die Freigabestellung weiter- oder zurückdreht.

Gemäß einer bevorzugten Ausführungsform ist der Träger mit der Bohrung ein Rohrstück, dessen innere und äussere Kontur teilweise eben ist. Die zu befestigenden Teile sind dann einerseits an dem Gewindebolzen und andererseits an dem Rohrstück angeordnet und können mit zwei Handgriffen miteinander verbunden werden.

Weitere Merkmale der Erfindung gehen aus der Beschreibung und den Ansprüchen im Zusammenhang mit der Zeichnung hervor.

- 3 -

Die Erfindung wird nachstehend anhand von Ausführungsbeispielen, die in der Zeichnung dargestellt sind,
näher beschrieben. Dabei zeigen:

Fig. 1:  eine Stirnansicht des Gewindebolzens;

Fig. 2:  einen nicht näher dargestellten Träger
mit Bohrung;

Fig. 3:  einen Träger mit eingesetztem, jedoch
nicht verriegelten Gewindebolzen;

Fig. 4:  eine Ansicht wie in Fig. 3 mit verriegeltem Gewindebolzen;

Fig. 5:  einen Gewindebolzen mit einem geschnittenen Rohrstück als Träger;

Fig. 6:  eine Draufsicht auf das Befestigungselement gemäß Fig. 5 und

Fig. 7:  eine Draufsicht auf eine abgewandelte
Ausführungsform.

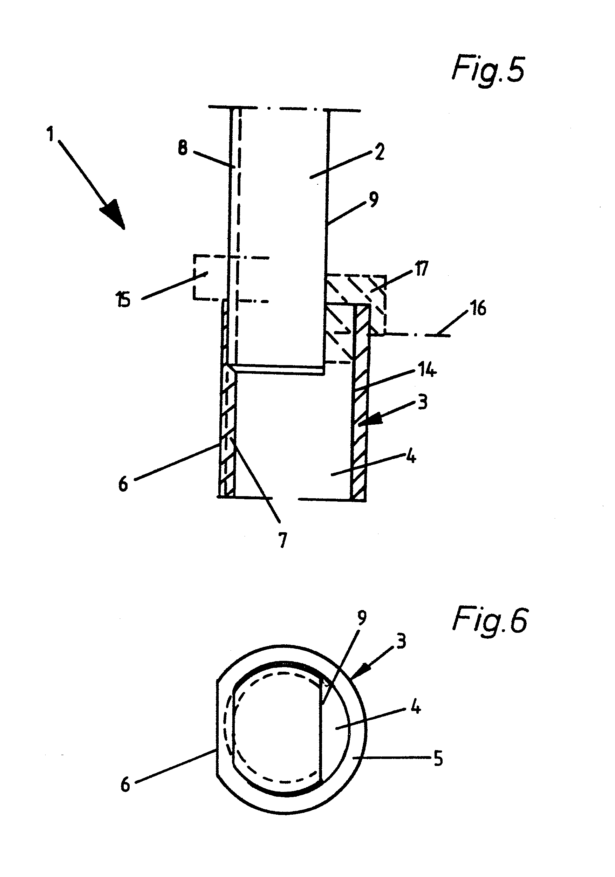

Das Befestigungselement 1 besteht gemäß Fig. 5 aus
einem Gewindebolzen 2 mit kreissegmentförmigem Querschnitt und einem Träger 3 z.B. in Gestalt eines Rohrstückes, das eine Bohrung 4 mit kreissegmentförmigem
Querschnitt aufweist, wozu das Rohrstück 3 aus einem
zylindrischen Wandstück 5 und einem ebenen oder nahezu
ebenen Wandstück 6 besteht. Im ebenen Wandstück 6 befinden sich in dem Rohrstück 3 gewindegangähnliche Erhebungen und Vertiefungen 7, in die die am zylindrischen Umfang des Gewindebolzens 2 befindlichen Gewindegänge 8 in der verriegelten Stellung gemäß den Fig. 5 und 6 eingreifen.

Die Funktion und Wirkungsweise des Befestigungselementes 1 ist wie folgt:

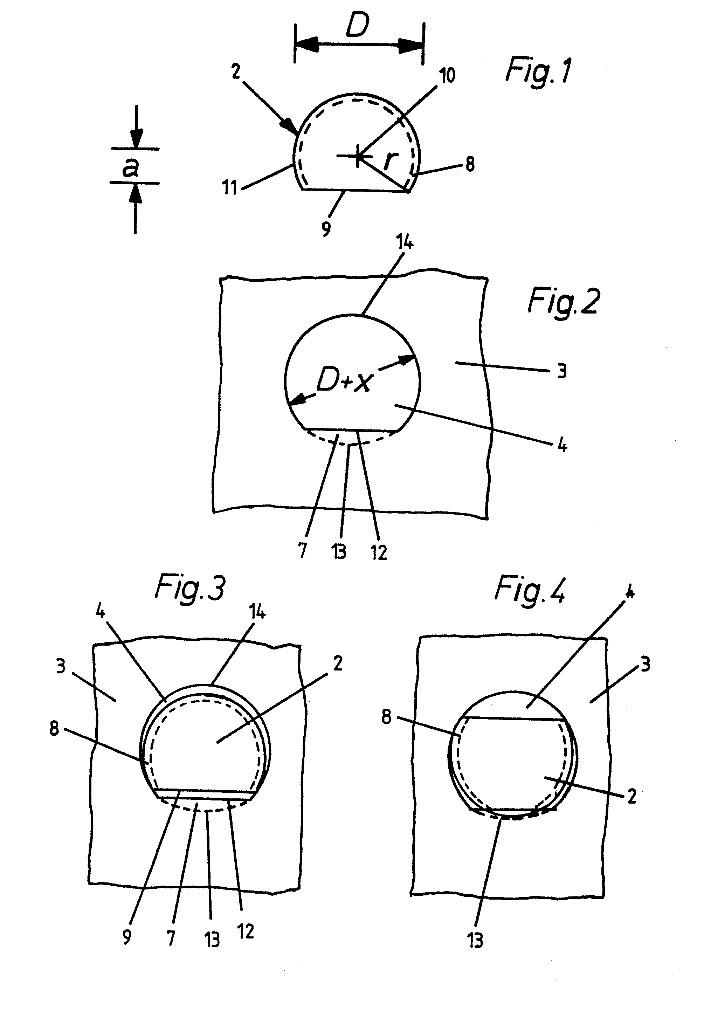

Im Querschnitt ist der Gewindebolzen 2 kreissegmentförmig. Er besitzt einen Durchmesser D und einen Radius r und die ebene Bolzenfläche 9 befindet sich in einem Abstand a von der Bolzenachse 1o, wie aus Fig. 1 hervorgeht. Ferner befinden sich die Gewindegänge 8 an seinem zylindrischen Umfang 11.

Die Bohrung 4 im Träger 3 ist ebenfalls kreissegmentförmig und besitzt einen Durchmesser D+x, so daß der Gewindebolzen 2 möglichst spielfrei in die Bohrung 4 eingeschoben und wieder herausgezogen werden kann. Der Abstand von der Mittellinie der Bohrung 4 bis zu der nicht zylindrischen Innenfläche 12 der Bohrung 4 beträgt daher ebenfalls a+x. Die Innenfläche 12 besteht aus mehreren gewindegangähnlichen Erhebungen und Vertiefungen 7 oder Zähnen 7, die hintereinander sowie quer zur Längsachse der Bohrung 4 angeordnet sind.

Der Abstand zwischen den Tälern 13 und der gegenüberliegenden Zylinderwand 14 der Bohrung ist gleich dem Maß D, d.h. also entspricht mindestens dem Aussendurchmesser D des Gewindebolzens 2.

- 5 -

In Fig. 3 ist der Gewindebolzen 2 in der Bohrung 4 in seiner frei verschiebbaren Lage dargestellt. Die Gewindegänge 8 des Gewindebolzens 2 hintergreifen daher die gewindegangähnlichen Erhebungen 7 im Träger 3 nicht. Wird der Gewindebolzen 2 aus seiner Stellung gemäß Fig. 3 jedoch in die Stellung gemäß Fig. 4, d.h. um 180° gedreht, so treten die Gewindegänge 8 am Gewindebolzen 2 zwischen die Zähne oder Erhebungen 7 in der Bohrung 4 des Trägers 3 und verriegeln den Gewindebolzen 2 am Träger 3 formschlüssig.

Um ein selbstätiges Lösen des Gewindebolzens 2 aus seiner Verriegelungsstellung gemäß Fig. 4 zu verhindern, kann eine Kontermutter 15 vorgesehen werden, wie dies strichpunktiert links in Fig. 5 angedeutet ist. Alternativ ist auch die Verwendung einer Konterschraube 16 möglich, von der in Fig. 5 lediglich die Mittellinie dargestellt ist. Ferner kann ein Klemmstück 17 zwischen die ebene Bolzenfläche 9 und die Zylinderwand 14 der Bohrung 4 eingesetzt werden, wenn eine selbstätige Drehung des Gewindebolzens relativ zur Bohrung 4 verhindert werden muß.

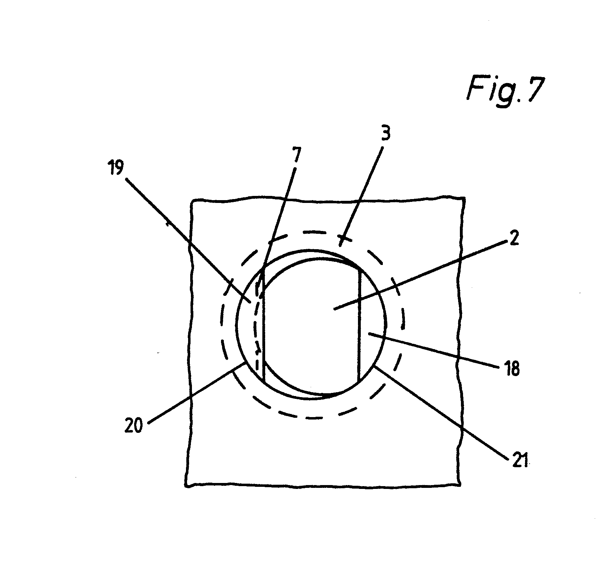

In Fig. 7 ist in Stirnansicht eine abgewandelte Ausführungsform dargestellt. Der Gewindebolzen 2 stimmt bezüglich Form und Gestalt identisch mit dem bisher beschriebenen Gewindebolzen 2 überein. Lediglich zur Erzielung eines lichten, kreissegmentförmigen Querschnitts in der Bohrung 18 ist ein ebenfalls vorzugsweise kreissegmentförmiger Einsatz 19 vorgesehen.

- 6 -

Dieser Einsatz 19 liegt mit einer zylindrischen Fläche 2o an der Wand 21 der Bohrung 18 an und weist gewindegangähnliche Erhebungen und Vertiefungen 7 auf, die dem Gewindebolzen 2 zugewandt sind und im wesentlichen in einer Ebene liegen. Die Befestigung des Einsatzes 19 an der Wand 21 der im Querschnitt kreisförmigen Bohrung 18 kann in beliebiger Form und beispielsweise auch durch Kleben erfolgen.

Die Erfindung ist nicht auf die in den Figuren dargestellten Ausführungsbeispiele beschränkt, vielmehr können noch Abwandlungen und Ergänzungen vorgenommen werden, ohne von dem grundsätzlichen Erfindungsgedanken abzuweichen. So ist es insbesondere möglich, beliebige Teile als Träger 3 zu verwenden, wobei dieser Träger auch jeder beliebige Körper sein kann, an dem ein Bolzen befestigt werden soll. Ein bevorzugtes Einsatzgebiet für das Befestigungselement ist der Installations- bzw. Rohrleitungsbau, weil die hier aufzuhängenden Teile mit dem Befestigungselement problemlos und in genauem Abstand befestigt werden können.

Eine Verriegelung zwischen dem Bolzen und der Zahnbohrung erfolgt schließlich nicht nur nach einer Drehung um 18o$^o$, sondern auch wesentlich früher. Nach 18o$^o$ ist nur der wirkungsvollste Eingriff der Gewindegänge 8 in die Erhebungen 7 und Vertiefungen der Bohrung erreicht. Bei dem dargestellten Ausführungsbeispiel ist schließlich der kreissegmentförmige Querschnitt von Bolzen und Bohrung größer als ein Halbkreis.

Patentansprüche

1) Befestigungselement, das einen Bolzen und einen diesen aufnehmenden Träger mit einer Bohrung umfaßt, dadurch gekennzeichnet, daß der Bolzen ein Gewindebolzen (2) mit kreissegmentförmigem Querschnitt ist, daß die Bohrung (4, 18) einen freien, kreissegmentförmigen Querschnitt mit einer solchen lichten Weite aufweist, daß der kreissegmentförmige Gewindebolzen (2) längs verschiebbar ist und daß in der nicht zylindrischen Fläche (12) der Bohrung (4) gewindegangähnliche Erhebungen (7) und Vertiefungen angeordnet sind.

2) Befestigungselement nach Anspruch 1, dadurch gekennzeichnet, daß der kreissegmentförmige Querschnitt größer als ein Halbkreis ist.

3) Befestigungselement nach Anspruch 1, dadurch gekennzeichnet, daß der Träger mit der Bohrung (4) ein Rohrstück (3) ist.

4) Befestigungselement nach Anspruch 1, dadurch gekennzeichnet, daß die gewindegangähnlichen Erhebungen (7) und Vertiefungen als Sperre auslaufen.

5) Befestigungselement nach Anspruch 1, dadurch gekennzeichnet, daß die gewindegangähnlichen Erhebungen (7) und Vertiefungen auf einem in eine Bohrung (18) mit kreisförmigem oder sonstigen Querschnitt einsetzbaren Einsatz (19) angeordnet sind.

0151263

Fig.1

Fig.2

Fig.3

Fig.4

Fig.5

Fig.6

0151263

Fig.7